# EUROPÄISCHE PATENTSCHRIFT

(11) **EP 3 592 128 B1**
(45) Veröffentlichungstag und Bekanntmachung des Hinweises auf die Patenterteilung: **28.10.2020**
(21) Anmeldenummer: 18712077.9
(22) Anmeldetag: 05.03.2018
(51) Int. Cl.: A01C 17/00, A01C 19/02

(54) **VERTEILMASCHINE**
DISTRIBUTION MACHINE
MACHINE DE DISTRIBUTION

(30) Priorität: 09.03.2017 DE 202017001237 U
(43) Veröffentlichungstag der Anmeldung: 15.01.2020
(73) Patentinhaber: RAUCH Landmaschinenfabrik GmbH, 76547 Sinzheim (DE)
(72) Erfinder: STÖCKLIN, Volker, 77975 Ringsheim (DE); ZEITVOGEL, Thomas, 77836 Rheinmünster (DE); DOLL, Franz, 76547 Sinzheim (DE)
(74) Vertreter: Lichti - Patentanwälte Partnerschaft mbB
(86) Internationale Anmeldenummer: PCT/EP2018/000085
(87) Internationale Veröffentlichungsnummer: WO 2018/162116

(56) Entgegenhaltungen:
- DE-A1- 3 617 302
- DE-A1- 10 126 233
- US-A- 3 191 944

## Beschreibung

Die Erfindung betrifft eine Verteilmaschine, insbesondere Streu- und/oder Sämaschine, mit wenigstens einem von einem Tragrahmen getragenen Behälter zur Aufnahme von pulver- und/oder partikelförmigem Verteilgut, wenigstens einer am Boden des Behälters angeordneten Auslauföffnung, einem der Auslauföffnung nachgeordneten Dosierorgan mit einem motorisch angetriebenen, relativ zu der Auslauföffnung verlagerbaren Dosierschieber sowie wenigstens einem dem Dosierorgan nachgeordneten Verteilorgan zum Verteilen des Verteilgutes auf dem Boden, wobei der Antrieb des Dosierschiebers des Dosierorgans eine axialfest gelagerte, mittels eines motorischen Drehantriebs mit axialfester Abtriebswelle drehangetriebene Gewindespindel umfasst, entlang welcher eine mit der Gewindespindel im Eingriff stehende Spindelmutter geführt ist, welche mit dem Dosierschieber oder einem hieran angeordneten Hebelarm in Verbindung steht, um den Dosierschieber durch Rotieren der Gewindespindel zu betätigen.

Verteilmaschinen der vorgenannten Art sind vornehmlich einerseits in Form von landwirtschaftlichen Streumaschinen zum Ausbringen von pulver- oder partikelförmigen Gut, wie insbesondere Dünger oder Saatgut, in vielfältiger Ausgestaltung bekannt, so beispielsweise in gezogener oder von einem Dreipunkt einer Zugmaschine, wie eines Traktors, aufgenommener Bauart. Derartige Verteilmaschinen umfassen einen das Verteilgut aufnehmenden Behälter, an dessen Boden üblicherweise eine oder zwei Auslauföffnungen angeordnet sind, wobei der jeweiligen Auslauföffnung ein Dosierorgan zugeordnet ist, um das Verteilgut in der gewünschten Menge - oder genauer: mit dem gewünschten Massenstrom - dem Behälter zu entnehmen. Das Dosierorgan umfasst häufig einen - sei es translatorisch oder sei es insbesondere rotatorisch - in Bezug auf die Auslauföffnung verlagerbaren Dosierschieber, welcher mittels eines geeigneten Stellorgans in Form eines Hydraulik- oder Elektrozylinders auf- und zusteuerbar ist, um je nach gewünschter Verteilungsbreite und geforderter Streumenge pro Flächeneinheit des Verteilgutes auf dem Boden, je nach Fahrgeschwindigkeit und je nach den physikalischen Eigenschaften des Verteilgutes, wie beispielsweise dessen Rieselfähigkeit, den gewünschten Massenstrom einstellen zu können. Unterhalb des Dosierorgans befindet sich ein Verteilorgan, mittels welchem das Verteilgut über die gewünschte Arbeitsbreite verteilt wird. Manche Verteilmaschinen sind überdies mit einer Einrichtung zur Verstellung des Aufgabepunktes des Verteilgutes auf das, insbesondere von einer mit Wurfflügeln bestückten Verteilerscheibe gebildete, Verteilorgan ausgestattet, wobei der Aufgabepunkt in Bezug auf die Verteilerscheibe radial (insbesondere zu Vergrößerung/Verkleinerung des Streufächers) und/oder in Umfangsrichtung (insbesondere zum Verdrehen des Streufächers etwa um die Drehachse der Verteilerscheibe) verstellbar sein kann. Eine derartige landwirtschaftliche Verteilmaschine ist beispielsweise in Form eines Zweischeibenstreuers aus der DE 10 2005 015 228 A1 bekannt.

Andererseits sind gattungsgemäße Verteilmaschinen in Form von Winterdienststreumaschinen bekannt, bei welchen der Behälter vornehmlich zur Aufnahme von in der Regel granulatförmigem Splitt und/oder Streusalz dient, wobei die Funktion einer solchen Winterdienststreumaschine weitestgehend jener der oben beschriebenen landwirtschaftlichen Streumaschine entspricht.

Beim Ausbringen des Verteilgutes - sei es in Form von Dünger oder Saatgut auf einem Feld oder sei es in Form von Splitt oder Salz auf einer Straße - werden in aller Regel große Mengen an Partikeln von Erde, Sand, Staub und dergleichen aufgewirbelt, welche insbesondere an die unterhalb des Behälters angeordneten Dosierorgane und deren Stellzylinder gelangen können, wodurch je nach Beschaffenheit und Größe der Partikel die Funktion beeinträchtigt werden kann, sofern sich beispielsweise größere Partikel einschließlich kleiner Steine dort verklemmen. Darüber hinaus neigt insbesondere das Verteilgut, welches gleichfalls in Pulver- oder Partikelform vorliegt, häufig zur Anreicherung an den unterhalb des Behälters befindlichen Dosierorganen bzw. an den zur Betätigung deren Dosierschieber dienenden Stellzylindern, wobei insbesondere die meisten festen Düngemittel wie auch Streusalz einen hygroskopischen Charakter besitzen, so dass sie in Verbindung mit Luftfeuchtigkeit oder gar Regen bzw. Schnee(matsch) agglomerieren und mit fortschreitender Ausbringung zunehmend in mehr oder minder harten Agglomeraten den vorgenannten Funktionsteilen anhaften. Dies gilt insbesondere - wenn auch nicht ausschließlich - dann, wenn die Verteilorgane von Streu- bzw. Verteilerscheiben gebildet sind, die das pulver- oder partikelförmige Gut radial an den Dosierorganen vorbei fortschleudern.

Die EP 2 727 449 A1 begegnet diesem Problem bei einer gattungsgemäßen Verteilmaschine mit einer unterhalb des Behälters angeordneten und mit einer Mehrzahl an Fluiddüsen ausgestatteten Reinigungseinrichtung. Dies bietet zwar - auch im Hinblick auf eine Reinigung der Dosierorgane selbst oder der Verteilorgane - entscheidende Vorteile, doch stellt die sich zwischen den durchgeführten Reinigungsvorgängen zunehmend einstellende Verschmutzung der Stellzylinder während des Betriebs gleichwohl ein Problem hinsichtlich ihrer Funktions- und Wartungssicherheit sowie ihrer notwendigen Robustheit dar.

Sofern es sich bei diesen, für den Antrieb des Dosierschiebers der Dosierorgane vorgesehenen Stellzylindern um Hydraulikzylinder handelt, deren translatorische Bewegung der Kolbenstange in den Zylinder hinein und aus diesem heraus mittels geeigneter Hebel(gestänge) in eine translatorische oder in eine rotatorische Bewegung des Dosierschiebers umgesetzt wird, wie sie aufgrund ihres einfachen Anschlusses an das Hydrauliksystem eines Traktors häufig zum Einsatz gelangen, ist es aufgrund der aggressiven Umgebungsbedingungen ferner einerseits erforderlich, zumindest die Kolbenstangen der Hydraulikzylinder aus sehr harten und chemisch resistenten Materialien, wie verchromtem Edelstahl, zu fertigen; andererseits werden sehr hohe Anforderungen an die zur Abdichtung der Kolbenstangen gegen den Zylinder eingesetzten Dichtungselemente gestellt, da die Kolbenstangen während des Betriebs ständig, wenngleich teils nur geringfügig, aus dem Zylinder aus- bzw. in diesen eingeschoben werden, wodurch die Gefahr einer Einschleppung von an der Kolbenstange anhaftenden Fremdkörpern und/oder Feuchtigkeit ins Innere des Hydraulikzylinders besteht. Darüber hinaus sollte sich zur Gewährleistung eines einwandfreien und verschleißarmen Betriebs von Hydraulikzylindern auf deren Kolbenstange ein Ölfilm befinden, welcher jedoch aufgrund seines adhäsiven Charakters andererseits die Gefahr einer Anbackung von Verunreinigungen und somit deren Einschleppung in den internen Ölkreislauf erhöht. Überdies kann die zumindest teilweise aus dem Hydraulikzylinder ausgezogene Kolbenstange auch außerhalb des - bei gattungsgemäßen Verteilmaschinen üblicherweise saisonalen - Betriebs über Monate aggressiven Umgebungsbedingungen ausgesetzt sein, so dass es trotz der aufwändigen und inerten Materialien zur Korrosion kommt. Die DE 10 2013 104 024 A1 versucht diesem Problem beispielsweise mit einem Schutzgehäuse des Hydraulikzylinders entgegenzuwirken, doch stellt sich auch hier die Schwierigkeit einer einwandfreien Dichtigkeit und gilt für die notwendigen Materialien und die Robustheit des Hydraulikzylinders selbst das oben gesagte.

Schließlich stellt sich bei gattungsgemäßen Dosierorganen, welche einen relativ zu der Auslauföffnung des zur Bevorratung des Verteilgutes dienenden Behälters verlagerbaren Dosierschieber aufweisen, im Falle eines Antriebs des Dosierschiebers mittels eines Hydraulikzylinders ein weiteres Problem dahingehend, dass zur Einstellung einer gewünschten Dosierrate (entsprechend einer bestimmten Öffnungsstellung des Dosierschiebers relativ zu der Auslauföffnung) mittels einer Skala und einem Fixierungssystem ein mit der gewünschten Öffnungsstellung des Dosierschiebers korrespondierender Anschlag eingestellt werden muss, gegen welchen der Hydraulikzylinder dann anfahren kann. Auf diese Weise lässt sich zwar eine bestimmte Dosierrate bzw. ein bestimmter Massenstrom an Verteilgut einstellen, doch lässt sich diese(r) nicht verändern, wenn sich beispielsweise die Fahrgeschwindigkeit gegenüber der ursprünglich einkalkulierten Geschwindigkeit ändert (und folglich eine höhere oder niedrigere Dosierrate vonnöten wäre).

Aus diesem Grund machen moderne Verteilmaschinen anstelle von Hydraulikzylindern häufig von Elektrozylindern zum Antrieb der Dosierschieber der Dosierorgane Gebrauch, deren translatorische Bewegung der Kolbenstange in den Zylinder hinein und aus diesem heraus in entsprechender Weise wie im Falle von Hydraulikzylindern mittels geeigneter Hebel(gestänge) in eine translatorische oder insbesondere in eine rotatorische Bewegung des Dosierschiebers umgesetzt wird. Derartige Elektrozylinder sind häufig mit Wegsensoren ausgestattet, um die genaue Auszugsposition der Kolbenstange in Bezug auf den Zylinder, welche repräsentativ für die Öffnungsstellung des Dosierorgans ist, zu erfassen und insbesondere steuerungstechnisch zu nutzen (DE 40 12 826 A1).

Allerdings stellen die bei gattungsgemäßen Verteilmaschinen auf die Stellorgane der Dosierorgane einwirkenden aggressiven Stäube oder Partikel von Mineraldünger, Salz oder auch anderen Verunreinigungen von außen auch im Falle von Elektrozylindern ein nicht unerhebliches Funktionsproblem dar. So entsteht beispielsweise beim Einziehen der Kolbenstange in bzw. beim Ausschieben derselben aus dem Elektrozylinder ein Über- bzw. Unterdruck im Innern des Zylinders, welcher bei gattungsfremden Applikationen zwar mittels geeigneter Ventile nach außen kompensiert werden kann, was im Falle von Verteilmaschinen jedoch schwerlich möglich ist, weil durch das Ventil Umgebungsstäube und/oder Feuchtigkeit in den Zylinder eindringen und zu Korrosion führen könnten. Andererseits birgt der im ausgeschobenen Zustand der Kolbenstange im Innern des Zylinders herrschende Unterdruck wiederum die Gefahr eines Einsaugens von Staub und/oder Feuchtigkeit, so dass - wie auch im Falle von Hydraulikzylindern - eine sehr hohe Dichtigkeit gewährleistet sein muss, was praktisch nur mit sehr kostspieligen Spezialdichtungen möglich ist. Sofern sich an der Kolbenstange verkrustete bzw. verhärtete Agglomerate gebildet haben, müssen diese ferner durch wirksame mechanische Abtreifer sicher zerstört und gelöst werden, um derartige Spezialdichtungen nicht zu beschädigen und die hohe Dichtigkeit aufrechtzuerhalten. Die hohe Dichtigkeit ist dabei auch im Hinblick darauf gerade bei Elektrozylindern von größter Bedeutung, weil im Innern des Zylinders üblicherweise das Wegsensorsystem zur Erfassung der aktuellen Auszugsposition der Kolbenstange untergebracht ist. Im Falle von eingedrungenen - festen und/oder flüssigen - Verunreinigungen leiden derartige Wegsensoren jedoch Schaden, sei es infolge mechanischer Beeinträchtigung oder sei es infolge Korrosion, so dass die Positionserfassung ungenau oder gänzlich unwirksam wird und sich folglich Fehlfunktionen hinsichtlich der Dosierrate ergeben.

Entsprechendes gilt weitestgehend für den Fall von elektromotorischen Spindelantrieben zur Verlagerung des Dosierschiebers des Dosierorgans, welche gleichfalls von ineinander teleskopierbaren Teilen Gebrauch machen und bei welchen die aus dem Motorgehäuse translatorisch ein- und ausfahrbare Spindel wiederum Gefahr läuft, partikuläre oder fluide Verunreinigungen in das Motorgehäuse einzutragen und den Elektromotor selbst oder dessen Sensoren zu beschädigen, wobei sich die genannten Verunreinigungen in dem spiralförmigen Spindelgewinde besonders hartnäckig ablagern und bei fortwährendem Betrieb bzw. fortwährendem Hinein- und Hinausfahren der Spindel in das bzw. aus dem Motorgehäuse praktisch nicht mehr gelöst werden können. Ein derartiger, mit einem Getriebe versehener elektromotorischer Spindelantrieb eines drehbar gelagerten Dosierschiebers eines Dosierorgans eines Scheibenstreuers ist beispielsweise der DE 41 05 059 C2 zu entnehmen, wobei am freien Ende der translatorisch verlagerbare Spindel ein diese mit dem Dosierschieber verbindender Hebel angelenkt und dem elektromotorischen Spindelantrieb ferner ein im Innern des die Spindel lagernden Motorgehäuses angeordneter Positionserfassungssensor zugeordnet ist. Ein ähnlicher Spindelantrieb eines drehbar gelagerten Dosierschiebers eines Dosierorgans für Scheibenstreuer ist aus der DE 36 17 302 A1 bekannt, bei welchem an der in das Motorgehäuse einschiebbaren und aus diesem ausziehbaren Verstellspindel wiederum das eine Ende eines den Dosierschieber tragenden Hebels angelenkt ist, wobei der Hebel ferner mit einem Wegaufnehmer zur Erfassung seiner aktuellen Position in Verbindung steht.

Bei sämtlichen, durch die obigen Probleme ausgelösten Funktionsbeeinträchtigungen ergibt sich zwangsläufig ein Arbeitsstillstand der Verteilmaschine, welche in der Regel nur schwer oder gar nicht in eine Art manuellen Notbetrieb versetzt werden kann. Nachdem gattungsgemäße Verteilmaschinen aber fast ausschließlich saisonal eingesetzt werden und für ihren notwendigen Einsatz üblicherweise ein nur kurzes Zeitfenster zur Verfügung steht (sei es im Falle einer saisonalen Düngung bei einem vorgegebenen Zustand der Bepflanzung oder sei es bei plötzlich auftretendem Schneefall), müssen derartige Ausfälle der Verteilmaschine so weit wie überhaupt möglich vermieden werden.

Als weiteres Problem der zur Betätigung des Dosierschiebers gattungsgemäßer Dosierorgane verwendeten Elektrozylindern, welche von ineinander teleskopierbaren Teilen Gebrauch machen, kommt hinzu, dass aufgrund zunehmender Größe (bzw. zunehmender Arbeitsbreiten) und zunehmenden Fahrgeschwindigkeiten sowie zunehmenden Automatisierungsprozessen immer höhere Einzugs- und Ausschubgeschwindigkeiten der Kolbenstange bzw. der Verstellspindel in den und aus dem Elektrozylinder erforderlich sind. Nachdem der Wirkungsgrad von Elektrozylindern aufgrund des für den üblicherweise reibungsintensiven Betrieb erheblichen Kraftaufwandes relativ gering ist, besteht folglich ein immer größerer Bedarf an zur Verfügung stehender elektrischer Leistung. Dies ist nicht nur im Hinblick auf einen hohen elektrischen Energieverbrauch von Nachteil, sondern insbesondere auch im Hinblick darauf, dass die Elektrozylinder gattungsgemäßer Verteilmaschinen in der Regel von dem Bordnetzsystem der Zugmaschine gespeist werden müssen, wobei sowohl in der Landtechnik als auch bei herkömmlichen Straßenfahrzeugen zumeist nur ein 12 V-Netz zur Verfügung steht. Handelt es sich bei der Verteilmaschine insbesondere um eine solche mit elektrischer bzw. elektronischer Steuerung und/oder Regelung mehrerer Funktionen der Verteilmaschine, so können bis zu sechs elektrische Stellantriebe (jeweils zwei für die Dosierorgane, die gegebenenfalls vorhandenen Einrichtungen zur Verstellung des Aufgabepunktes sowie für gegebenenfalls vorhandene Rührwerke) vorhanden sein, welche beim gleichzeitigen Betrieb gemeinsam mit der Steuer-/Regelelektronik selbst sowie mit einer dieser üblicherweise zugeordneten Bedieneinheit sehr hohe elektrische Leistungen erfordern. Dies kann zu sehr hohen Stromstärken bis hin zu einem Zusammenbruch des Bordnetzes bzw. zu einer Notabschaltung mittels der Sicherungen führen, so dass sich ein Bedarf an einer Erhöhung des schlechten Wirkungsgrades von elektrischen Stellzylindern ergibt.

Die DE 101 26 233 A1 beschreibt eine Verteilmaschine gemäß dem Oberbegriff des Anspruchs 1, deren Dosierschieber mittels einer motorisch angetriebenen Gewindespindel translatorisch zwischen einer Schließstellung und mehreren Öffnungsstellungen hin und her verlagerbar ist.

Wie bereits erwähnt, sind gattungsgemäße Verteilmaschinen häufig mit Einrichtungen zur Verstellung des Aufgabepunktes des Verteilgutes auf die Verteilorgane ausgestattet, in Bezug auf deren konstruktive Ausgestaltung im Wesentlichen drei Ausführungsvarianten bekannt sind, welche
- eine drehbare Lagerung eines mit der Auslauföffnung aus dem Behälter versehenen Bodens;
- eine koaxial mit dem Verteilorgan drehbare Lagerung einer dem Dosierorgan nachgeordneten Hülse mit einer radialen Aufgabeöffnung auf das Verteilorgan; oder
- eine drehbare oder auch translatorisch verfahrbare Lagerung einer dem Dosierorgan nachgeordneten Rutsche oder Rinne
umfassen. Hinsichtlich der erstgenannten Alternative beschreibt beispielsweise die EP 2 057 876 A1 eine Verteilmaschine in Form eines Zweischeibenstreuers, dessen beiden Verteilerscheiben je eine Einrichtung zur Verstellung des Aufgabepunktes des Verteilgutes zugeordnet ist, welche je einen, mit je einer Auslauföffnung des Behälters versehenen drehbaren Boden umfasst. Die drehbaren Böden sind mittels je eines, getrennt voneinander betätigbaren Elektrozylinders oder mittels eines gemeinsamen Elektrozylinders und einem entsprechenden Hebelsystem angetrieben. In Bezug auf die zweite Alternative ist z.B. der EP 1 145 614 B1 eine wiederum in Form eines Scheibenstreuers ausgestaltete Verteilmaschine zu entnehmen, welche eine unmittelbar oberhalb der Oberfläche der Verteilerscheibe angeordnete und koaxial mit dieser mittels eines Elektrozylinders drehbare Hülse umfasst. Das Verteilgut wird der Hülse mittels des Dosierorgans zugeführt und über eine radiale Aufgabeöffnung der Hülse auf die Oberfläche der Verteilerscheibe in deren zentralem Bereich aufgegeben. Je nach Drehposition der Hülse wird deren Aufgabeöffnung in Umfangsrichtung der Verteilerscheibe verlagert, so dass sich - in ähnlicher Weise wie bei der oben beschriebenen ersten Alternative - eine Verstellung des Aufgabepunktes in Umfangsrichtung der Verteilerscheibe ergibt. In Bezug auf die dritte Alternative sind beispielsweise aus den EP 0 489 674 B1, EP 0 682 857 B1 oder EP 2 454 928 B1 Verteilmaschinen in Form von Scheibenstreuern bekannt, bei welchen das Verteilgut mittels des Dosierorgans einer drehbar gelagerten Rutsche oder Rinne aufgegeben wird. Durch Drehen der Rutsche mittels ihr zugeordneter Elektrozylinder wird deren freies Ende relativ zu der stationär gelagerten Verteilerscheibe verlagert, um den Aufgabepunkt des Verteilgutes auf die Verteilerscheibe - dort üblicherweise sowohl in Radial- als auch in Umfangsrichtung derselben - zu verstellen.

Der Erfindung liegt die Aufgabe zugrunde, eine Verteilmaschine der eingangs genannten Art auf einfache und kostengünstige Weise dahingehend weiterzubilden, dass unter zumindest weitestgehender Vermeidung der vorgenannten Nacheile auch unter Einwirkung von aggressiven pulver- oder partikelförmigen Stoffen einschließlich Feuchtigkeit bzw. Nässe bei extremen Witterungsbedingungen die Betriebssicherheit des Dosierorgans und insbesondere auch die Verstellgeschwindigkeit seines Dosierschiebers erhöht wird, wobei das Dosierorgan einschließlich des Stellantriebs seines Dosierschiebers vorzugsweise möglichst kompakt ausgebildet sein sollte.

Erfindungsgemäß wird diese Aufgabe bei einer Verteilmaschine der eingangs genannten Art dadurch gelöst, dass der Dosierschieber des Dosierorgans um eine Schwenkachse rotatorisch verlagerbar ist, welche den mit der Auslauföffnung versehenen Boden des Behälters durchsetzt, wobei an der dem Dosierschieber entgegengesetzten Seite des Bodens ein drehfest mit seiner Schwenkachse verbundener Hebelarm mit der Spindelmutter in Verbindung steht.

Die erfindungsgemäße Ausgestaltung der Stellorgane des Dosierschiebers des Dosierorgans mit der mit der axialfesten, aber drehbar gelagerten Gewindespindel im Eingriff stehenden Spindelmutter beseitigt zunächst sämtliche mit den Stellorganen gemäß dem Stand der Technik, welche ineinander teleskopierbare Teile umfassen, verbundenen Problematiken hinsichtlich schädlicher Anbackungen von Verunreinigungen, wie Verteilgutpartikeln, Schmutz und/oder Feuchtigkeit, an deren Kolbenstange oder Verstellspindel, da die axialfest gelagerte Gewindespindel mittels eines rein rotatorisch wirksamen Drehantriebs, dessen Abtriebswelle folglich gleichfalls drehbar, aber axialfest gelagert ist (siehe hierzu auch weiter unten), in Rotation versetzt werden kann und somit keine nennenswerte Gefahr eines Eindringens von Verunreinigungen in den Antriebsmotor besteht, ohne dass für den Antrieb des Dosierschiebers translatorisch ineinander teleskopierbare Teile mit hieran angelenkten Hebeln erforderlich sind. Stattdessen sieht die Erfindung eine Übertragung der rein rotatorischen Bewegung der axialfesten Abtriebswelle des motorischen Drehantriebs auf die gleichfalls axialfest gelagerte Gewindespindel vor, deren mit ihr im Eingriff stehende Spindelmutter diese rotatorische Bewegung in eine translatorische Bewegung entlang der Gewindespindel umsetzt und dabei den Dosierschieber bzw. einen hieran angeordneten Hebelarm mitnimmt, um für verschiedene (teilweise und gänzliche) Öffnungsstellungen des Dosierschiebers sowie zumindest eine Schließstellung desselben zu sorgen, in welcher der Dosierschieber die Auslauföffnung gänzlich verschließt.

Bei der schwenkbaren Lagerung des Dosierschiebers des Dosierorgans ist erfindungsgemäß vorgesehen dass der rotatorisch verlagerbare Dosierschieber eine, insbesondere im Wesentlichen senkrecht zu der Auslauföffnung angeordnete, beispielsweise etwa vertikale, Schwenkachse aufweist, welche den mit der Auslauföffnung versehenen Boden des Behälters durchsetzt, wobei an der dem Dosierschieber entgegengesetzten Seite des Bodens ein drehfest mit seiner Schwenkachse verbundener Hebelarm mit der Spindelmutter in Verbindung steht. Dies ermöglicht nicht nur eine Anordnung des Antriebs des Dosierorgans auf der dem oberhalb des Verteilorgans befindlichen Dosierschieber entgegengesetzten (oberen) Seite des mit der Auslauföffnung versehenen Bodens, sondern auch einen sehr platzsparenden, kompakten und vor äußeren Eiwirkungen geschützten Aufbau. Der erfindungsgemäße Antrieb des Dosierschiebers lässt sich folglich mangels teleskopierbarer Teile mit hieran angelenkten Hebeln sehr kompakt und platzsparend ausbilden und eignet sich somit in idealer Weise für den sehr begrenzt zur Verfügung stehenden Bauraum unterhalb des zur Bevorratung des Streugutes dienenden Behälters von gattungsgemäßen Verteilmaschinen, wie insbesondere (Zwei)scheibenstreuern, wobei er sich auch in Verbindung mit beliebigen bekannten Ausführungsformen von Einrichtungen zur Verstellung des Aufgabepunktes des Verteilgutes auf die Verteilorgane anbietet, wie sie weiter oben beschrieben sind.

Ferner ist der Kraftaufwand des erfindungsgemäßen Antriebs des Dosierschiebers mangels ineinander teleskopierbarer Stellorgane gegenüber dem Stand der Technik deutlich geringer und folglich der Wirkungsgrad deutlich höher als jener von elektrischen Stellzylindern, so dass der Energieverbrauch gesenkt und zudem keine Gefahr einer Überlastung des Bordnetzes der Verteilmaschine selbst oder einer Zugmaschine, wie eines Traktors oder eines Straßenfahrzeugs, besteht. Dementsprechend ergibt sich auch infolge der geringeren notwendigen Antriebskräfte ein geringerer Verschleiß, was die Wartungsintervalle verlängert und insbesondere das Pannenrisiko während des saisonalen Einsatzes just zu dem Zeitpunkt, in welchem die Verteilmaschine benötigt wird, minimiert. Darüber hinaus lassen sich insbesondere durch den Einsatz von nachstehend näher erläuterten elektromotorischen Drehantrieben zum Antrieb der Gewindespindel problemlos sehr hohe Verstellgeschwindigkeiten des Dosierschiebers erzielen, da der Drehzahl solcher Drehantriebe ungleich geringere Grenzen gesetzt sind als dies bei translatorischen Einzugs- und Ausschubbewegungen von teleskopierbaren Kolben-/Zylindereinheiten der Fall ist, wie sie im Stand der Technik zur Betätigung der Dosierschieber Einsatz finden.

Es sei an dieser Stelle darauf hingewiesen, dass mit "axialfester" Gewindespindel bzw. "axialfester" Abtriebswelle des motorischen Drehantriebs im Sinne der vorliegenden Offenbarung selbstverständlich der Betriebszustand nach Endmontage angesprochen ist, wohingegen es anlässlich der Montage bzw. Demontage, z.B. nach Lösen der entsprechenden Lager, selbstverständlich möglich sein kann, die Gewindespindel und/oder insbesondere die Abtriebswelle des Drehantriebs in Axialrichtung zu bewegen, um sie beispielsweise ein- und ausbauen zu können.

Die Gewindespindel kann folglich vorzugsweise mittels eines elektromotorischen Drehantriebs, wie eines Elektromotors, drehangetrieben sein, dessen Abtriebswelle - wie auch die Gewindespindel - während des Betriebs axialfest gelagert ist und keine translatorische, sondern eine ausschließlich rotatorische Bewegung auf die Gewindespindel überträgt. Besonders vorteilhaft erweisen sich in diesem Zusammenhang z.B. bürstenlose Gleichstrom- bzw. Servomotoren, welche bei einem einfachen und robusten Aufbau nicht nur einen hohen Wirkungsgrad bei sehr hohen Drehgeschwindigkeiten, sondern auch eine nur geringe Selbsthemmung besitzen, so dass bei einem Ausfall eine leichte manuelle Notbetätigung möglich ist (siehe hierzu auch weiter unten).

Dabei kann einerseits z.B. vorgesehen sein, dass die Gewindespindel von der Abtriebswelle des motorischen Drehantriebs gebildet oder hiermit drehfest verbunden ist, wobei die drehfeste Verbindung der Abtriebswelle des (elektro)motorischen Drehantriebs vorzugsweise von der Gewindespindel lösbar sein sollte, um für eine einfache Montage bzw. Demontage zu sorgen. Andererseits kann insbesondere vorgesehen sein, dass die Gewindespindel mittels eines Riementriebs, insbesondere in Form eines Zahnriementriebs, oder auch in Form eines Rund-, Flach-, Keil-, Keilrippenriementriebs oder dergleichen, oder mittels kämmender Zahnräder, oder auch mittels Reibräder, mit der Abtriebswelle des motorischen Drehantriebs in Verbindung steht, was insbesondere im Hinblick auf einen sehr platzsparenden, kompakten Aufbau des Antriebs von Vorteil sein kann und überdies eine Untersetzung der Drehzahl der Abtriebswelle des (elektro)motorischen Drehantriebs auf die Drehzahl der Gewindespindel ermöglicht, sofern das auf der Abtriebswelle sitzende Zahn- oder Reibrad bzw. das (Zahn)riemenrad einen (merklich) größeren Durchmesser aufweist als jenes der Gewindespindel bzw. einer diese tragenden Welle, um nicht nur für eine sehr schnelle, sondern auch äußerst präzise Betätigung des Dosierschiebers zu sorgen, welcher mit der entlang der Gewindespindel geführten und mit dieser im Eingriff stehenden Spindelmutter in Verbindung steht.

Aus entsprechenden Gründen sowie auch in konstruktiver Hinsicht vorteilhaft kann die Abtriebswelle des (elektro)motorischen Drehantriebs dabei insbesondere im Wesentlichen parallel zu der Gewindespindel angeordnet sein, welche sich ihrerseits im Übrigen vorteilhaferweise in einer zur Verlagerungsebene des Dosierschiebers etwa parallelen Ebene erstreckt. Darüber hinaus kann bei beiden der vorgenannten Ausführungsformen, wiederum insbesondere im Hinblick auf einen kompakten Aufbau, die Abtriebswelle des (elektro)motorischen Drehantriebs beispielsweise lediglich einen axialfesten Wellenstummel umfassen, dessen Rotationsbewegung entweder durch drehfeste Verbindung mit der hierzu koaxial angeordneten, gleichfalls axialfest gelagerten Gewindespindel bzw. mit einer diese tragenden Welle oder durch kämmende Zahn- bzw. Reibräder oder (Zahn)riementriebe auf die Gewindespindel bzw. auf die diese tragende Welle übertragen wird.

Die erfindungsgemäße Ausgestaltung des Antriebs des Dosierschiebers des Dosierorgans macht es aufgrund dessen Verbindung mit der translatorisch entlang der Gewindespindel, welche ihrerseits drehangetriebenen, aber axialfest gelagert ist, verlagerbaren Spindelmutter grundsätzlich möglich, dass der rotatorisch verlagerbare Dosierschieber um die im Wesentlichen senkrecht zur Axialrichtung der Gewindespindel und/oder mit radialem Abstand zu derselben angeordnete, beispielsweise etwa vertikale, Schwenkachse, verlagerbar ist, wie dies bei gattungsgemäßen Verteilmaschinen zumeist der Fall ist.

Die Spindelmutter kann zum Zwecke einer exakten Führung entlang der Gewindespindel beispielsweise mittels eines Nutensteins, in welchem sie drehfest befestigt ist, entlang der Gewindespindel geführt sein, wobei grundsätzlich auch beliebige andere bekannte Führungen der Spindelmutter denkbar sind, welche unter Gewährleistung einer translatorischen Verlagerung entlang der Gewindespindel stets für eine drehfeste Anordnung der Spindelmutter sorgen, um sie durch Rotieren der Gewindespindel antreiben zu können. Um bei dem schwenkbar gelagerten Dosierschieber seinen sich während des Verschwenkens verändernden Abständen in Bezug auf die sich üblicherweise linear erstreckende Gewindespindel Rechnung zu tragen, kann der Dosierschieber oder der hieran angeordnete Hebelarm grundsätzlich mittels als solcher aus dem Stand der Technik bekannter, einerseits an dem Dosierschieber oder an dem hieran angeordneten Hebelarm, andererseits an der Spindelmutter angelenkter Hebel(gestänge) mit der Spindelmutter verbunden sein. Indes hat es sich im Hinblick auf eine demgegenüber wesentlich kompaktere, in konstruktiver Hinsicht einfachere und kostengünstigere Ausgestaltung mit einer zudem exakteren Übertragung der translatorischen Bewegung der Spindelmutter auf den rotatorisch verlagerbaren Dosierschieber als vorteilhaft erwiesen, wenn die Spindelmutter oder der Nutenstein wenigstens einen sich im Wesentlichen senkrecht zur Axialrichtung der Gewindespindel sowie zweckmäßigerweise etwa parallel zur Schwenkachse des Dosierschiebers erstreckenden, zwecks einfacher Montage und Demontage vorzugsweise lösbaren, Mitnehmer aufweist, welcher mit einem Langloch des Dosierschiebers oder des hieran angeordneten Hebelarms im Eingriff steht. Bewegt sich die Spindelmutter bzw. der Nutenstein folglich translatorisch entlang der axialfest rotierenden Gewindespindel, so vermag sich der beispielsweise im Wesentlichen von einem Zapfen mit kreisrundem oder zu dem Langloch komplementärem, aber demgegenüber kürzeren Querschnitt gebildete Mitnehmer der Spindelmutter entlang dem Langloch des Dosierschiebers bzw. des hieran angeordneten Hebelarms zu verlagern und dabei die mit dem Drehen des Dosierschiebers um seine Schwenkachse einhergehenden Abstandsänderungen zu kompensieren.

Die Gewindespindel kann vorzugsweise, insbesondere gemeinsam mit deren (elektro)motorischem Drehantrieb, an der dem Dosierschieber des Dosierorgans entgegengesetzten Seite der Auslauföffnung bzw. des mit der Auslauföffnung versehenen Bodens des Behälters angeordnet sein, so dass sie vor den umherfliegenden Streugutpartikeln geschützt ist bzw. sind und zugleich ein äußerst kompakter Aufbau unter bestmöglicher Ausnutzung des nur begrenzt zur Verfügung stehenden Bauraumes gewährleistet ist. Die Gewindespindel und insbesondere auch der motorische Drehantrieb sind folglich zweckmäßigerweise an der Oberseite des mit der Auslauföffnung versehenen Bodens des Streugutbehälters der Verteilmaschine - sei er stationär oder sei er mittels einer Einrichtung zur Verstellung des Aufgabepunktes des Streugutes auf die Verteilerscheiben verlagerbar, insbesondere drehbar - angeordnet, während sich der Dosierschieber unterhalb der Auslauföffnung befindet. Zum bestmöglichen Schutz vor äußeren Einwirkungen bietet sich ferner eine Abdeckung an, welche zweckmäßigerweise den gesamten Antrieb des Dosierschiebers, also die Gewindespindel einschließlich dem motorischen Drehantrieb sowie dem jeweiligen Drehmomenten-Übertragungsmittel, abdeckt bzw. verkapselt.

Die Gewindespindel kann vorzugsweise, insbesondere gemeinsam mit deren motorischem Drehantrieb,
- an dem mit der Auslauföffnung versehenen Boden des Behälters, insbesondere lösbar, oder
- an einem hieran, insbesondere lösbar, befestigten Tragflansch
angeordnet sein, so dass sich ein sehr kompakter Aufbau ergibt. Um für eine größtmöglich Spielfreiheit zu sorgen, kann der Dosierschieber im Falle einer schwenkbaren Anordnung desselben zweckmäßigerweise direkt an dem Boden des Behälters oder insbesondere direkt an dem hieran befestigten, z.B. verschraubten, Tragflansch gelagert sein.

Zwecks einer einfachen Montage und Demontage kann der Dosierschieber und/oder der ihn mit der Spindelmutter verbindende Hebelarm vorzugsweise lösbar mit der Schwenkachse des Dosierschiebers verbunden sein, indem er beispielsweise mit einem Befestigungsflansch der Schwenkachse verschraubt ist. Der Dosierschieber kann dabei im fertig montierten Zustand insbesondere starr sein, d.h. der Dosierschieber selbst ist (dreh)fest mit dem ihn mit der Gewindespindel verbindenden Hebelarm sowie mit seiner Schwenkachse verbunden, welche ihrerseits, insbesondere an dem mit der Auslauföffnung versehenen Boden oder an dem hieran festgelegten Befestigungsflansch, schwenkbar gelagert ist.

Im Übrigen kann in diesem Zusammenhang vorgesehen sein, dass der den Dosierschieber des Dosierorgans mit der Spindelmutter verbindende Hebelarm zwischen dem mit der Auslauföffnung versehenen Boden des Behälters oder dem hieran befestigten Tragflansch einerseits und dem (elektro)motorischen Drehantrieb der Gewindespindel andererseits, insbesondere im Wesentlichen parallel zur Ebene des Bodens oder des Tragflansches, verlagerbar ist. Der motorische Drehantrieb erstreckt sich also oberhalb des Dosierschiebers und insbesondere zwischen der hiervon drehangetriebenen Gewindespindel und der Schwenkachse des Dosierschiebers, wodurch sich eine optimale Raumausnutzung bei einer größtmöglichen Kompaktheit des Antriebs des Dosierschiebers ergibt.

Wie bereits erwähnt, ist der (elektro)motorische Drehantrieb der Gewindespindel zweckmäßigerweise in einem Gehäuse aufgenommen, um sämtlichen funktionalen Bestandteilen desselben einen größtmöglichen Schutz vor äußeren Einwirkungen zu bieten und insbesondere eine Korrosion infolge eines Eindringens von Feuchtigkeit sowie aggressiver Feinpartikel, wie während der Streu- bzw. Säarbeit umherfliegender Streu- bzw. Saatgutpartikel aus Mineraldünger oder Streusalz, zuverlässig zu verhindern. Das Gehäuse ist zu diesem Zweck insbesondere im Wesentlichen staub- und flüssigkeitsdicht ausgestaltet, wobei die Abtriebswelle des (elektro)motorischen Drehantriebs insbesondere mittels wenigstens einer Gleitringdichtung, gegen das Gehäuse abgedichtet ist. Aufgrund der rein rotatorischen Bewegung der Abtriebswelle des (elektro)motorischen Drehantriebs ergibt sich dabei eine sehr einfache Abdichtung der Abtriebswelle gegenüber dem Gehäuse mittels herkömmlicher Dichtungen. Wie bereits erwähnt, erweist sich ferner eine Abdeckung, vorzugsweise des gesamten Antriebs des Dosierschiebers, als vorteilhaft.

Wie ebenfalls bereits erwähnt, kann in bevorzugter Ausgestaltung ferner vorgesehen sein, dass dem (elektro)motorischen Drehantrieb wenigstens ein Getriebe, insbesondere in Form eines Koppelgetriebes, Koaxialgetriebes, Winkelgetriebes und/oder Planetengetriebes, zugeordnet ist, wobei der (elektro)motorische Drehantrieb mit dem Getriebe insbesondere nach Art eines Getriebemotors in einem einzigen, gemeinsamen Gehäuse untergebracht sein kann oder der motorische Drehantrieb sowie gegebenenfalls ein oder mehrere, diesem nachgeschaltete(s) Getriebe in separaten Gehäusen untergebracht sein können, welche an dem Gehäuse des (elektro)motorischen Drehantriebs befestigt sind, um für einen allseitigen Verschluss der Komponenten sowohl des Drehantriebs als auch des Getriebes zu sorgen. Aufgrund dessen, dass das Getriebe die Rotationsgeschwindigkeit des (elektro)motorischen Drehantriebs insbesondere auf eine (merklich) geringere Rotationsgeschwindigkeit untersetzt, kann einerseits ein (Elektro)motor mit verhältnismäßig geringer Leistung zum Einsatz gelangen, andererseits lässt sich insbesondere eine höchst präzise Ansteuerung des Dosierschiebers des Dosierorgans sicherstellen, da mehrere Umdrehungen des (Elektromotors) infolge des diesem nachgeschalteten Getriebes nur eine Teilumdrehung seiner Abtriebswelle bewirken. Der mit einer solchen, aus elektromotorischem Drehantrieb und nachgeschaltetem Getriebe gebildeten Antriebseinheit erzielbare Wirkungsgrad beträgt bei der erfindungsgenmäßen Übertragung der ausschließlich rotatorischen Bewegung der Abtriebswelle auf die axialfeste Gewindespindel in der Größenordnung von mindestens 40% oder mehr. Die Art des ausgewählten Getriebes richtet sich vornehmlich nach dem bei gattungsgemäßen Verteilmaschinen unterhalb des Behälters nur sehr beschränkt zur Verfügung stehenden Bauraum, wobei beispielsweise Planetengetriebe, Koppel- oder Winkelgetriebe oder Kombinationen von Koppel- oder Winkel- mit Koaxialgetrieben als geeignet gefunden wurden.

In weiterhin zweckmäßiger Ausgestaltung kann vorgesehen sein, dass der Abtriebswelle des (elektro)motorischen Drehantriebs oder wenigstens einer anderen Welle desselben oder eines Getriebes desselben ein Positionserfassungssensor, insbesondere in Form eines Winkelsensors, welcher die Winkelstellung der jeweiligen Welle zu erfassen vermag, und/oder eines Drehzahlsensors, welcher die Anzahl an Umdrehungen der jeweiligen Welle zu erfassen vermag, zugeordnet ist, wie er als solcher aus dem Stand der Technik bekannt ist. Der Sensor kann dabei zweckmäßigerweise mit einer Steuer- und/oder Regeleinrichtung der Verteilmaschine in Verbindung stehen. Mangels einer translatorischen bzw. telekopierbaren Verlagerung der lediglich drehangetriebenen, aber axialfesten Abtriebswelle des (elektro)motorischen Drehantriebs weist letzterer neben einer sehr hohen Langzeitdichtigkeit insbesondere den Vorteil einer funktionssicheren Unterbringung eines solchen Sensors im Gehäuse des (elektro)motorischen Drehantriebs bzw. in einem diesem nachgeordneten oder gemeinsamen Getriebegehäuse, so dass die elektromotorische Antriebseinheit im Wesentlichen nach Art eines Servomotors, beispielsweise in Form eines bürstenlosen Gleichstrommotors, ausgestaltet sein kann. Der Positionserfassungssensor eines derartigen elektromotorischen Drehantriebs dient dabei zur Erfassung der Ist-Stellung der Spindelmutter bzw. des hiermit in Verbindung stehenden Dosierschiebers, insbesondere in Echtzeit, so dass die SollStellung mittels der Steuer- und/oder Regeleinrichtung der Verteilmaschine gegebenenfalls nachjustiert werden kann. Als Positionserfassungssensoren kommen praktisch beliebige bekannte Sensoren in Betracht, welche die Umdrehungszahl und/oder die Winkelposition von Wellen zu erfassen vermögen. Lediglich beispielhaft seien in diesem Zusammenhang Induktionsgeber, Reed-Sensoren, Magnetorestriktionssensoren und dergleichen erwähnt.

Die Steuer- und/oder Regeleinrichtung kann beispielsweise auch eine Steuerplatine umfassen, welche gleichfalls in dem dauerhaft dichten Gehäuse des (elektro)motorischen Drehantriebs oder auch in einem separaten Bedienmodul bzw. Bedienterminal untergebracht sein kann. Ihr kann in üblicher Weise zweckmäßig eine Eingabeeinrichtung zugeordnet sein, um die Steuer- und/oder Regeleinrichtung gemäß den gewünschten Einstellungen des Dosierschiebers des Dosierorgans sowie auch weiterer Funktionsteile der Verteilmaschine, wie Einrichtungen zur Verstellung des Aufgabepunktes und dergleichen, zu befehligen. Die Eingabeeinrichtung kann z.B. im Führerhaus einer Zugmaschine, wie eines Traktors oder eines Straßenfahrzeugs, untergebracht oder von einem tragbaren Bedienterminal gebildet sein, um in üblicher Weise für die gewünschte Fernbedienbarkeit zu sorgen.

Während der elektromotorische Drehantrieb grundsätzlich auch eine eigene Stromversorgungseinrichtung, wie eine Batterie, einen Akkumulator oder dergleichen, aufweisen kann, kann er vorzugsweise von der elektrischen Stromversorgung einer Zugmaschine, wie eines Traktors oder eines Straßenfahrzeugs, mit Strom versorgt sein. In diesem Fall kann der elektromotorische Drehantrieb insbesondere eine elektrische Schnittstelle aufweisen, welche an die elektrische Stromversorgung der Zugmaschine anschließbar ist.

Alternativ oder zusätzlich zu einem dem (elektro)motorischen Drehantrieb der Gewindespindel zugeordneten Positionserfassungssensor der oben beschriebenen Art kann beispielsweise auch vorgesehen sein, dass der entlang der Gewindespindel verlagerbaren Spindelmutter bzw. dem Nutenstein ein Positionserfassungssensor, insbesondere in Form eines an einer sich parallel zu der Gewindespindel erstreckenden Wandung angeordneten und mit der Spindelmutter bzw. dem Nutenstein zusammenwirkenden Gleit- oder Schleifkontaktes, zugeordnet ist, was insoweit von Vorteil sein kann, als die Position der Gewindespindel unmittelbar repräsentativ für den hiermit mechanisch in Verbindung stehenden Dosierschieber ist. Der Positionserfassungssensor kann hierbei wiederum zweckmäßiger in der oben geschilderten Weise mit einer mit einer Steuer- und/oder Regeleinrichtung der Verteilmaschine in Verbindung stehen.

Darüber hinaus kann gemäß einer vorteilhaften Weiterbildung vorgesehen sein, dass an dem Dosierschieber des Dosierorgans eine Handhabe, wie im Wesentlichen in Form eines sich von dem Dosierschieber fort erstreckenden Bedienhebels, insbesondere lösbar, festgelegt ist, um den Dosierschieber manuell betätigen zu können. Die Handhabe kann dabei insbesondere starr an dem Dosierschieber, z.B. an seiner hiermit drehfest verbundenen Schwenkachse, befestigt sein und sich hiervon etwa radial nach außen erstrecken. Sie kann ferner, vorzugsweise lösbar, dauerhaft an dem Dosierschieber bzw. an dessen Schwenkachse befestigt, z.B. hieran verschraubt sein, oder der Dosierschieber kann mit einer entsprechend positionierten Aufnahme, wie z.B. einer Bohrung, mit Bohrungen versehenen Laschen oder dergleichen, ausgestattet sein, mit welcher die als separates Bedienteil ausgebildete Handhabe bedarfsweise in lösbaren Betätigungseingriff gebracht werden kann. Auf diese Weise ist es möglich, im Falle einer Störung des (elektro)motorischen Drehantriebs der Gewindespindel oder dessen Stromversorgung, wie dem Bordnetz einer Zugmaschine, den Dosierschieber manuell in seine Schließstellung zu versetzen, um einen Abtransport der Verteilmaschine zu gewährleisten, ohne dass noch in dem Behälter befindliches Verteilgut bei (teilweise) geöffnetem Dosierschieber durch die Auslauföffnung herausrieseln kann, was nicht nur sowohl wirtschaftliche als auch Umweltschäden zur Folge hätte, sondern insbesondere auch ein hohes Sicherheitsrisiko im Hinblick auf eine Rutschgefahr darstellte, wenn das Verteilgut bei den üblichen Erschütterungen und Vibrationen während der Fahrt auf öffentliche Straßen gelangte.

Im Übrigen kann es sich bei der Verteilmaschine beispielsweise um einen Ein- oder Zwei- bzw. Mehrscheibenstreuer handeln, welcher wenigstens zwei, insbesondere genau zwei, am Boden des Behälters angeordnete Auslauföffnungen aufweist, welchen jeweils ein Dosierorgan mit je einem Dosierschieber sowie jeweils ein dem Dosierorgan nachgeordnetes Verteilorgan zum Verteilen des Verteilgutes auf dem Boden nachgeordnet ist, wobei insbesondere jedem Dosierschieber eines jeweiligen Dosierorgans ein separater erfindungsgemäßer Antrieb zu geordnet ist, um die Dosierorgane unabhängig voneinander steuern bzw. regeln zu können.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische perspektivische Ansicht einer in Form eines landwirtschaftlichen Zweischeibenstreuers ausgebildeten Verteilmaschine von schräg hinten;
- Fig. 2: eine schematische perspektivische Ansicht einer Ausführungsform eines der Dosierorgane der Verteilmaschine gemäß Fig. 1 mit einem mit einer Auslauföffnung im Boden des Behälters zusammenwirkenden, schwenkbar gelagerten Dosierschieber von schräg unten betrachtet;
- Fig. 3: eine im Wesentlichen der Fig. 2 entsprechende schematische perspektivische Ansicht des Dosierorgans in Explosionsdarstellung und einschließlich eines gleichfalls an der Unterseite des Bodens des Behälters festgelegten Auslaufschachtes;
- Fig. 4: eine schematische perspektivische Ansicht einer Ausführungsform eines erfindungsgemäßen Antriebs des Dosierschiebers des Dosierorgans gemäß Fig. 2 und 3, welcher eine entlang einer drehangetriebenen Gewindespindel geführte und hiermit im Eingriff stehende Spindelmutter umfasst, welche mit einem Hebelarm des Dosierschiebers in Verbindung steht, von schräg oben betrachtet;
- Fig. 5: den Antrieb des Dosierschiebers gemäß Fig. 4 von schräg unten betrachtet; und
- Fig. 6: den Antrieb des Dosierschiebers gemäß Fig. 4 und 5 ähnlich der Fig. 4 von schräg oben betrachtet, aber zur Veranschaulichung der Anordnung des an dem Dosierschieber festgelegten Hebelarms mit entfernter Spindelmutter.

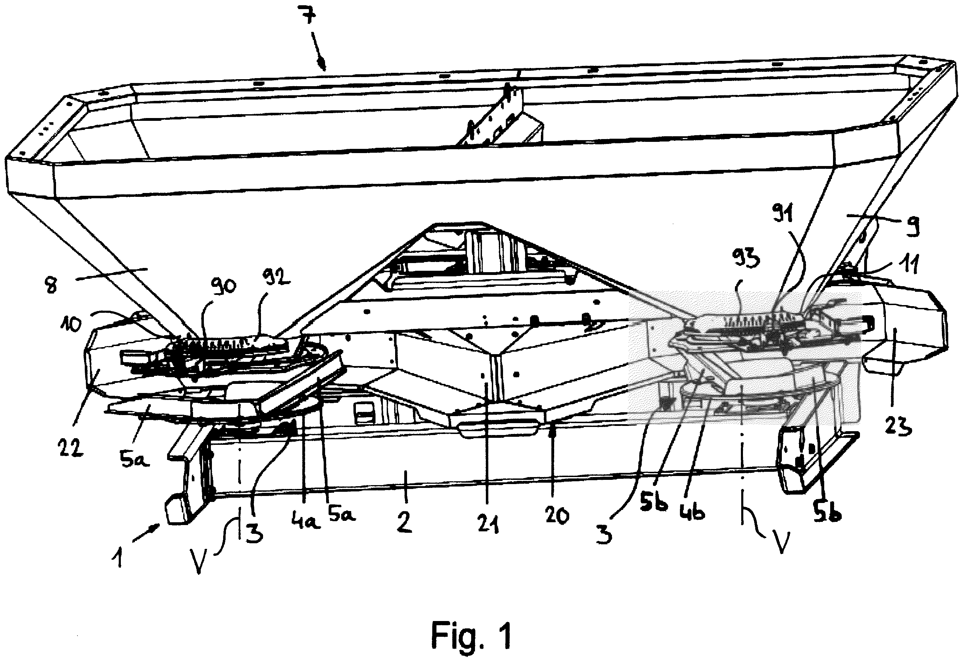

Die in der Fig. 1 wiedergegebene Verteilmaschine in Form eines Zweischeibenstreuers für landwirtschaftliche Zwecke weist einen Rahmen 1 mit einer Quertraverse 2 auf, welche im Falle eines von der Zapfwelle einer Zugmaschine, wie eines Traktors, abgeleiteten mechanischen Antriebs der Verteilorgane 3 einen Quertrieb aufnimmt, während im Falle eines drehzahlregelbaren hydraulischen oder insbesondere elektrischen Antriebs (nicht gezeigt) die einem jeden Verteilorgan 3 zugeordneten Hydraulik- bzw. Elektromotoren an der Quertraverse 2 festgelegt sein können. Die Verteilorgane 3 sind in Form von um eine etwa vertikale Drehachse V drehangetriebenen Verteilerscheiben 4a, 4b ausgebildet, welche in üblicher Weise mit Wurfflügeln 5a, 5b bestückt sind.

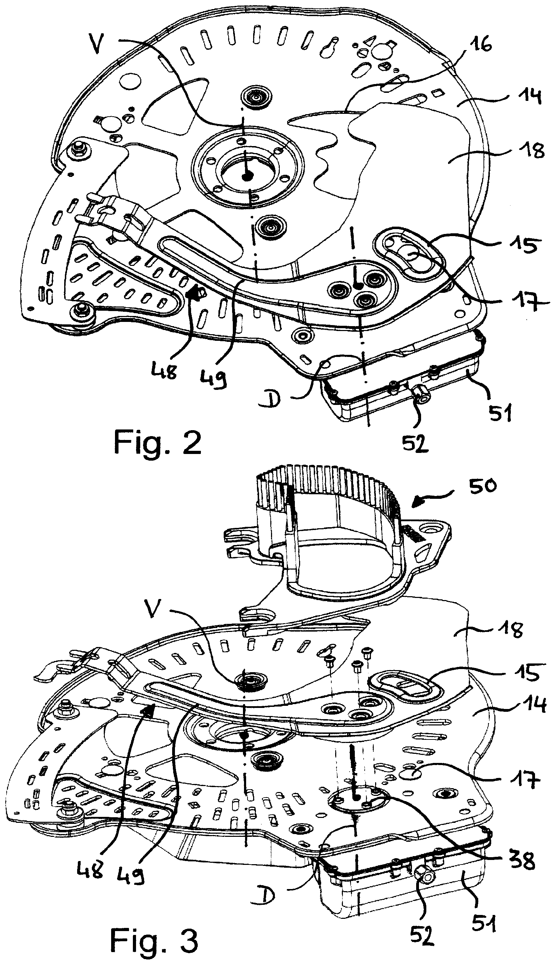

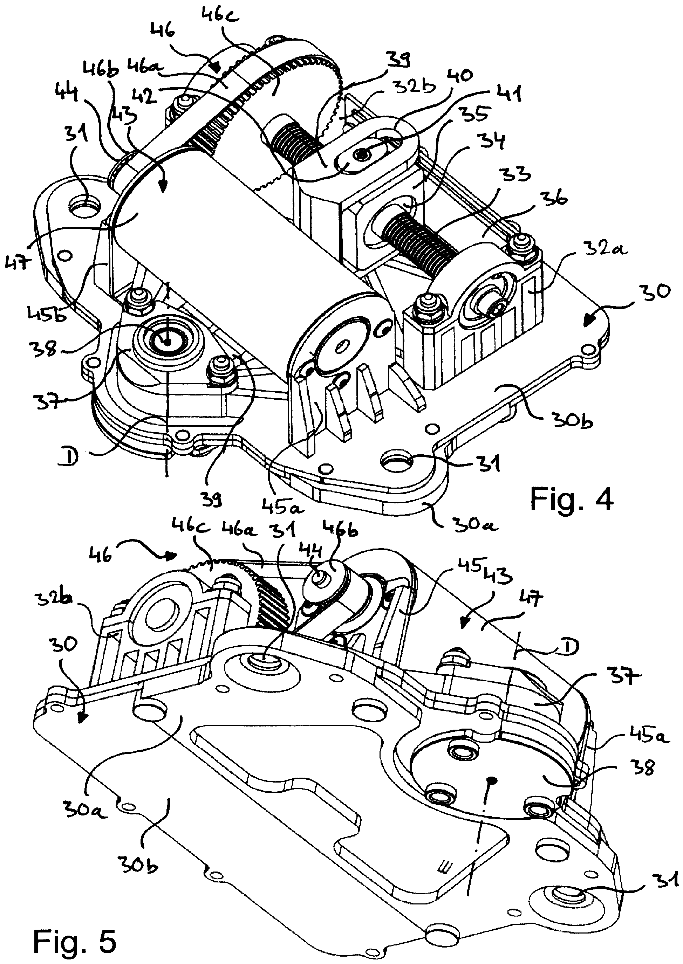

Die Verteilmaschine weist ferner einen zur Bevorratung des Verteilgutes, wie insbesondere Dünger oder Saatgut, dienenden Behälter 7 auf, welcher im vorliegenden Fall zwei sich etwa trichterförmig nach unten verjüngende Behälterteile 8, 9 umfasst, welche am unteren Ende jeweils in ein Unterteil 10, 11 mit einem nach unten offenen Bodenring (in der Fig. 1 nicht erkennbar) übergehen. Unmittelbar unterhalb eines jeweiligen Bodenrings der Unterteile 10, 11 eines jeweiligen Behälterteils 8, 9 ist jeweils ein den Fig. 2 und 3 zu entnehmender Boden 14 mit einer Auslauf- bzw. Dosieröffnung 16 (vgl. die Fig. 2) angeordnet, deren freier Querschnitt mittels eines - hier rotatorisch - verlagerbaren Dosierschiebers 18 eines Dosierorgans zur Einstellung des gewünschten Massenstromes an Verteilgut zwischen einer Schließstellung, in welcher der Dosierscheiber 18 die Auslauföffnung 16 gänzlich verschließt, und einer gänzlichen Öffnungsstellung sowie beliebigen teilweisen Öffnungsstellungen elektromotorisch auf- und zusteuerbar ist. Der mit einer jeweiligen Auslauföffnung 16 zusammenwirkende Dosierschieber 18 befindet sich dabei wiederum unmittelbar unterhalb eines jeweiligen, mit der Auslauföffnung 16 versehenen Bodens 14 und ist um eine sich etwa senkrecht zu dem Boden 14 erstreckende, im Wesentlichen vertikale Achse D schwenkbar gelagert (siehe hierzu auch die Fig. 4 bis 6). Zur mechanischen Begrenzung seiner Schwenkbarkeit kann der Dosierschieber 18 beispielsweise ferner mit einem sich um einen entsprechenden Umfangsabschnitt desselben ersteckenden Langloch 15 ausgestattet sein, in welches ein stationär an der Unterseite eines jeweiligen Bodens 14 angeordneter Zapfen 17 derart eingreift, dass er sich während des Verschwenkens des Dosierschiebers 18 um seine Schwenkachse D entlang des Langloches 15 verlagert und einerseits in der Schließstellung, andererseits in der maximalen Öffnungsstellung des Dosierschiebers an den - in Umfangsrichtung betrachtet - entgegengesetzten Enden des Langloches 15 anstößt.

Darüber hinaus erkennt man in den Fig. 2 und 3 eine in Form eines Bedienhebels 49 ausgestaltete Handhabe 48, welche sich im Wesentlichen von seiner Schwenkachse D oder seitlich hiervon etwa radial nach außen fort erstreckt, welche erforderlichenfalls zur manuellen Betätigung des Dosierschiebers 18 dient. Der Bedienhebel 49 ist im vorliegenden Fall starr, aber mittels Schrauben lösbar an dem Dosierschieber 18 befestigt, kann aber z.B. auch einstückig mit diesem verbunden oder nach Art eines separaten Werkzeugs ausgestaltet sein, welches bedarfsweise in eine entsprechende Aufnahme des Dosierschiebers 18 von außen eingeführt werden kann (nicht gezeigt). Auf diese Weise kann der Dosierschieber 18 des Dosierorgans mittels der Handhabe 48 beispielsweise manuell geschlossen werden, sofern während der Feldarbeit eine Störung des Dosierorgans, seines Antriebs oder dessen elektrischer Stromversorgung auftreten sollte, um die Verteilmaschine ohne Verlust an Verteilgut abtransportieren zu können. In der Explosionsdarstellung gemäß Fig. 3 ist ferner ein an der Unterseite des Bodens 14 lösbar festlegbarer Auslaufschacht 50 erkennbar, welcher sich zweckmäßigerweise bis unmittelbar oberhalb der Verteilerscheiben 4a, 4b erstreckt und im Innern desselben das Streugut von dem Dosierorgan an die jeweilige Verteilerscheibe 4a, 4b überführt werden kann. Derartige Auslaufschächte sind aus dem Stand der Technik bekannt.

Wie wiederum aus der Fig. 1 hervorgeht, kann die Verteilmaschine überdies mit einem Verteilerscheibenschutz 20 ausgestattet sein, welcher die Verteilerscheiben 4a, 4b mit den Wurfflügeln 5a, 5b teilweise umgibt. Er besteht im vorliegenden Fall aus mehreren miteinander verbundenen Blechabschnitten, von welchen ein mittlerer Abschnitt 21 zwischen den Verteilerscheiben 4a, 4b und den Behälterteilen 8, 9, insbesondere dessen Unterteilen 10, 11, angeordnet ist und je ein weiterer bogenförmiger Abschnitt 22, 23 die Verteilerscheiben 4a, 4b in ihrem - in Fahrtrichtung betrachtet - vorderen Bereich umgeben.

Darüber hinaus kann einem jeweiligen Verteilorgan 3 in Form der Verteilerscheiben 4a, 4b eine nicht im Einzelnen zeichnerisch wiedergegebene Einrichtung zur Verstellung des Aufgabepunktes des Verteilgutes auf die Verteilerscheiben 4a, 4b zugeordnet sein, welche beispielsweise eine koaxial zur Drehachse V der Verteilerscheiben drehbare Lagerung der Böden 14 der Behälterteile 8, 9 des Behälters 7 und einen entsprechenden Drehantrieb - sei er manuell oder sei er insbesondere motorisch oder aktuatorisch - der Böden 14 umfasst, wie es als solches aus dem Stand der Technik, wie beispielsweise aus der eingangs zitierten EP 2 057 876 A1, bekannt ist. Die in den Böden 14 befindliche Dosier- bzw. Auslauföffnung 16 lässt sich auf diese Weise, z.B. entlang einer Kreisbahn, um einen Umfangsabschnitt um die Verteilerscheibe 4a, 4b herum verlagern, wodurch der Aufgabepunkt in Umfangsrichtung der Verteilerscheibe 4a, 4b verstellbar ist. Dabei kann beispielsweise mit jedem drehbaren Boden 14 eine lediglich in der Fig. 1 angedeutete Positionsanzeige 90, 91 in Form eines Zeigers verbunden sein kann, welcher mit einer stationär an einem jeweiligen Behälterteil 8, 9 des Behälters 7 festgelegten Skala 92, 93 zusammenwirkt, welche mit einer die Lage des Aufgabepunktes repräsentierenden Skalierung versehen sind.

In den Fig. 4 bis 6 sind verschiedene Ansichten eines Ausführungsbeispiels eines erfindungsgemäßen Antriebs des Dosierschiebers 18 des Dosierorgans wiedergegeben, dessen Komponenten im vorliegenden Fall an einem Tragflansch 30 lösbar festgelegt sind, welcher an der dem Dosierschieber 18 entgegengesetzten Seite des mit der Auslauföffnung 16 versehenen Bodens 14, aber außerhalb des in den Fig. 4 bis 6 nicht nochmals gezeigten Behälters 7; 8, 9 (vgl. Fig. 1) lösbar, z.B. mittels in entsprechende Bohrungen 31 eingreifender Schrauben (nicht gezeigt), festgelegt ist, so dass der Antrieb bestmöglich von den während des Betriebs von den Verteilerscheiben 4a, 4b abgeschleuderten Streugutpartikeln geschützt ist. Der Tragflansch 30 ist im vorliegenden Fall zweiteilig ausgestaltet und umfasst einerseits eine Tragplatte 30a an seiner dem Boden 14 zugewandten Seite, andererseits eine mit entsprechenden, im Nachfolgenden näher beschriebenen Befestigungselementen zur Halterung der verschiedenen Komponenten des Antriebs des Dosierschiebers 18 ausgestattete Montageplatte 30b an seiner dem Boden 14 abgewandten Seite, wobei die Tragplatte 30a und die Montageplatte 30b des Tragflansches 30 mittels fluchtender Bohrungen 31 gemeinsam an dem Boden 14 verschraubt sind. Die zweiteilige Ausgestaltung des Tragflansches 30 gibt dabei insbesondere die Möglichkeit, hierfür verschiedene Materialien auswählen zu können, wobei die Tragplatte 30a beispielsweise aus Metallwerkstoffen gefertigt sein kann, um dem Tragflansch 30 eine sehr hohe mechanische Festigkeit und Steifigkeit zu verleihen, während die mit den Befestigungselementen versehene Montageplatte 30b, insbesondere einstückig, aus Kunststoff gefertigt sein kann, um für eine kostengünstige Herstellung, z.B. mittels Spritzgießen, zu sorgen. Indes kann der Tragflansch 30 selbstverständlich auch einteilig ausgebildet sein, wie z.B. als Formteil aus Metall- oder Spritzguss (nicht gezeigt). Während der Dosierschieber 14, dessen Schwenkachse D bei dem gezeigten Ausführungsbeispiel den Boden 14 etwa senkrecht durchsetzt, grundsätzlich auch an dem Boden 14 gelagert sein kann, ist er im vorliegenden Fall gleichfalls an dem Tragflansch 30 - hier: an dessen Montageplatte 30b - und senkrecht zu diesem gelagert, wobei der Tragflansch 30 - oder genauer: dessen Montageplatte 30b - zu diesem Zweck eine entsprechende Lagerbuchse 37 aufweist.

Der von teleskopierbaren Teilen gänzlich freie Antrieb des Dosierschiebers 18 umfasst eine drehangetriebene, aber axialfest, z.B.an entsprechenden Lagerböcken 32a, 32b des Tragflansches 30 bzw. dessen Montageplatte 30b, drehbar gelagerte Gewindespindel 33, welche sich im Wesentlichen senkrecht zur Schwenkachse D des Dosierschiebers 18 und sowohl mit Abstand von als auch etwa tangential zu derselben erstreckt. Mit der Gewindespindel 33 steht eine lediglich in der Fig. 4 erkennbare Spindelmutter 34 im Eingriff, welche entlang der Gewindespindel 33, also in Axialrichtung derselben, geführt ist, so dass sie sich beim Rotieren der Gewindespindel 33 translatorisch entlang dieser verlagert. Zur Führung der Spindelmutter 34 kann beispielsweise ein gleichfalls lediglich in der Fig. 4 erkennbarer Nutenstein 35 vorgesehen sein, in welchem sie drehfest angeordnet und/oder einstückig mit diesem gebildet ist. Dem Nutenstein 35 kann eine übliche Führungsnut (in den Zeichnungen nicht erkennbar) zugeordnet sein, welche sich parallel zu der Gewindespindel 33 erstreckt und an dem Tragflansch 30 bzw. an dessen Montageplatte 30b selbst und/oder beispielsweise in einer die Lagerböcke 32a, 32b verbindenden Wandung 36 angeordnet sein kann (vgl. wiederum die Fig. 4).

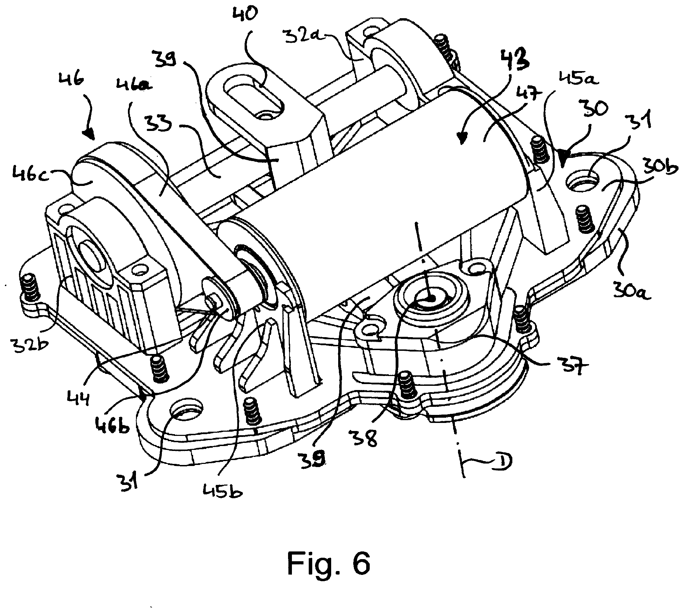

Wie den Fig. 4 bis 6 in Verbindung mit den Fig. 3 und 4 zu entnehmen ist, ist der Dosierschieber 18 des Dosierorgans folglich gemeinsam mit dem als Bedienhebel 49 dienenden Handhabe 48 an einem den Boden 14 etwa senkrecht durchsetzenden Wellenflansch 38 verschraubt, welcher seine Schwenkachse D bildet und welcher seinerseits in der Lagerbuchse 37 des Tragflansches 38 schwenkbar gelagert ist. Wie sich aus den Fig. 4 bis 6 und am besten aus der Fig. 6 ergibt, ist der die Schwenkachse D des Dosierschiebers 18 bildende Wellenflansch 38 ferner an seinem dem Dosierschieber 18 entgegengesetzten Ende, also an seiner dem Dosierschieber 18 entgegengesetzten Seite des Bodens 14, drehfest mit einem Hebelarm 39 verbunden, um ihn durch Rotieren der Gewindespindel 33 und dadurch bedingtes Verlagern der Spindelmutter 34 entlang derselben zu betätigen. Der Hebelarm 39 steht zu diesem Zweck mit der Spindelmutter 34 in Verbindung, was im vorliegenden Fall über den drehfest mit der Spindelmutter 34 verbundenen Nutenstein 35 geschieht.

Um die unterschiedlichen Abstände der Spindelmutter 34 bzw. des Nutensteins 35 in Bezug auf die Schwenkachse D des Dosierschiebers 18 je nach dem, in welcher Axialposition der Gewindespindel 33 sich die Spindelmutter 34 gerade befindet, zu kompensieren, weist der Hebelarm 39 an seinem dem die Schwenkachse D bildenden Wellenflansch 38 entgegengesetzten, der Spindelmutter 34 zugewandten Ende ein Langloch 40 auf, welches sich im Wesentlichen in Radialrichtung in Bezug auf die Schwenkachse D bzw. im Wesentlichen in Erstreckungsrichtung des Hebelarm 39 erstreckt. Der mit der Spindelmutter 34 verbundene Nutenstein 35 wiederum weist einen in das Langloch 40 des Hebelarms 39 eingreifenden und sich zweckmäßigerweise sowohl hierzu als auch zur Axialrichtung der Gewindespindel 33 etwa senkrecht erstreckenden Mitnehmer 41 auf (vgl. die Fig. 4), welcher zwecks einer einfachen Montage vorzugsweise lösbar an der Spindelmutter 34 bzw. an dem Nutenstein 35 befestigt, beispielsweise hieran verschraubt ist. Während der Mitnehmer 41 z.B. von einem Zapfen mit (kreis)rundem Querschnitt mit einem der Breite des Langloches 40 etwa entsprechendem Durchmesser gebildet sein kann (nicht gezeigt), umfasst er beim vorliegenden Ausführungsbeispiel zum Zwecke einer noch exakteren und absolut spielfreien Führung in dem Langloch 40 ein um die Erstreckungsachse des Mitnehmers 41 schwenkbares Formstück 42 mit zwei entgegengesetzten, zu den Längsrändern des Langloches 40 parallelen Randabschnitten, deren Abstand etwa der Breite des Langloches 40 entspricht, wobei die Länge des Formstückes 42 insbesondere derart dimensioniert ist, dass es erst dann gegen die Enden des Langloches 40 anstößt, wenn der Hebelarm 39 jeweils eine um die Schwenkachse D verschwenkte Position erreicht hat, welche der Schließstellung bzw. der gänzlichen Öffnungsstellung des Dosierschiebers 18 entspricht, in welcher er die Auslauföffnung 16 des Bodens 14 (siehe Fig. 2) gänzlich freilässt.

Wie sich des Weiteren aus den Fig. 4 bis 6 ergibt, weist der Antrieb des Dosierschiebers 18 ferner einen elektromotorischen Drehantrieb 43 auf, welcher zum rotatorischen Antrieb der Gewindespindel 33 dient, indem er hierauf eine ausschließlich rotatorische Bewegung überträgt. Während die von einem Wellenstummel gebildete axialfeste Abtriebswelle 44 des elektromotorischen Drehantriebs 43 grundsätzlich z.B. auch koaxial zu der Gewindespindel 33 angeordnet und drehfest mit dieser verbunden sein kann (nicht gezeigt), ist bei der vorliegenden Ausführungsform - nicht zuletzt im Hinblick auf einen sehr kompakten Aufbau des Antriebs - vorgesehen, dass der elektromotorische Drehantrieb 43 etwa parallel zu der Gewindespindel 33 sowie zwischen derselben und der Schwenkachse V des Dosierschiebers 18 angeordnet ist, wobei sie gleichfalls an dem Tragflansch 30 - oder genauer: an hierfür vorgesehenen Halteteilen 45a, 45b seiner Montageplatte 30b - lösbar festgelegt ist. Der elektromotorische Drehantrieb 43 übergreift dabei beispielsweise den Hebelarm 39 des Dosierschiebers 18, welcher folglich zwischen der Oberfläche des Tragflansches 30 - oder genauer: dessen Montageplatte 30b - und dem elektromotorischen Drehantrieb 43 in einer sich parallel zu dem Tragflansch 30 sowie zu dem Boden 14 erstreckenden Ebene um die Schwenkachse D schwenkbar verlagerbar ist. Die axialfest gelagerte Abtriebswelle 44 des elektromotorischen Drehantriebs 43 erstreckt sich folglich gleichfalls parallel zu der Gewindespindel 33, wobei zur Übertragung der Rotationsbewegung der Abtriebswelle 44 auf die Gewindespindel 33 im vorliegenden Fall ein Zahnriementrieb 46 dient, welcher einen Zahnriemen 46a umfasst, der einerseits auf einem drehfest mit der Abtriebswelle 44 sitzenden Zahnriemenrad 46b, andererseits mit einem drehfest auf der Drehachse der Gewindespindel 33 sitzenden Zahnriemenrad 46c im Eingriff steht. Das auf der Abtriebswelle 44 sitzende Zahnriemenrad 46b ist dabei vorzugsweise (merklich) kleiner als das auf der Drehachse der Gewindespindel 33 sitzende Zahnriemenrad 46b, um für eine Untersetzung der Rotationsgeschwindigkeit der Abtriebswelle 44 des elektromotorischen Drehantriebs 43 zu sorgen und auf diese Weise nicht nur für eine sehr schnelle, sondern auch sehr exakte Verlagerung bzw. Einstellung des Dosierschiebers 18 auf seine gewünschte Öffnungsstellung in Bezug auf die Auslauföffnung 16 zu sorgen. Selbstverständlich können anstelle des Zahnriementriebs 46 auch andere Drehmomentenübertragungsmittel vorgesehen sein, wie Reib- oder Keilriementriebe, kämmende Zahnräder oder dergleichen (nicht gezeigt).

Der elektromotorische Drehantrieb 43 weist zweckmäßigerweise einen in einem Gehäuse 47 aufgenommenen Elektromotor auf, wobei es sich bei dem Elektromotor insbesondere um einen Getriebemotor handeln kann, welcher mit einem Getriebe von praktisch beliebiger bekannter Bauart ausgestattet ist. Die Abtriebswelle 44 des elektromotorischen Drehantriebs 43 durchsetzt dabei das Gehäuse 47 an dessen Stirnseite und ist gegen letzteres mittels einer zeichnerisch nicht dargestellten Gleitringdichtung 40 staub- und flüssigkeitsdicht abgedichtet. In dem Gehäuse 47 des elektromotorischen Drehantriebs 43 können ferner vorzugsweise gleichfalls nicht zeichnerisch wiedergegebene Positionserfassungssensoren untergebracht sein, welcher beispielsweise nach Art von Winkel- und/oder Drehzahlsensoren die genaue Winkelstellung der Abtriebswelle 44 oder einer anderen Welle, z.B. des Getriebes, und folglich der hiermit korrespondierenden Position des Dosierschiebers 18 zu erfassen vermögen. Der oder die Positionserfassungssensor(en) steht bzw. stehen mit einer Steuer- und/oder Regeleinrichtung (ebenfalls nicht dargestellt) der Verteilmaschine in Wirkverbindung, um die gewünschten Dosiermengen bzw. Massenströme an Verteilgut einzustellen sowie insbesondere anhand des gleichfalls sensorisch erfassten Ist-Massenstromes an Verteilgut sowie gegebenenfalls auch in Abhängigkeit der, beispielsweise mittels GPS erfassten, Position der Verteilmaschine auf dem Feld während der Streuarbeit zu regeln. Der elektromotorische Drehantrieb 43 kann folglich nach Art eines Servomotors, wie beispielsweise eines bürstenlosen DC-Motors, ausgestaltet sein.

Alternativ oder zusätzlich zu dem oder den Positionserfassungssensor(en) des elektromotorischen Drehantriebs 43 kann beispielsweise auch der der entlang der Gewindespindel 33 verlagerbaren Spindelmutter 34 bzw. dem hiermit drehfest verbundenen Nutenstein 35 ein Positionserfassungssensor (nicht gezeigt) zugeordnet sein, welcher zu den vorgenannten Zwecken gleichfalls mit der Steuer- und/oder Regeleinrichtung der Verteilmaschine in Verbindung steht und z.B. in Form eines an der sich parallel zu der Gewindespindel 33 erstreckenden Wandung 36 (vgl. die Fig. 4) angeordneten und mit der Spindelmutter 34 bzw. mit dem Nutenstein 35 zusammenwirkenden Gleit- oder Schleifkontaktes ausgebildet sein kann.

Der elektromotorische Drehantrieb 43 kann ebenso wie die etwaigen Positionserfassungssensoren zweckmäßigerweise über eine an der Verteilmaschine oder an einer Zugmaschine derselben, wie z.B. einem Traktor, vorgesehene elektrische Schnittstelle (nicht gezeigt) an die Stromversorgung der Zugmaschine anschließbar sein, so dass die Verteilmaschine selbst keine eigene Stromversorgung erfordert, sondern vom Bordnetz der Zugmaschine mit elektrischer Energie versorgt wird.

Schließlich erweist es sich als zweckmäßig, den gesamten Antrieb des Dosierschiebers 18 zum Schutz vor äußeren Einwirkungen zu verkapseln, was beispielsweise mittels einer auf den Tragflansch 30 - oder genauer: auf dessen Montageplatte 30b - aufsetzbaren Abdeckung 51 geschehen kann, deren der Schwenkachse D zugewandter Abschnitt in den Fig. 2 und 3 erkennbar ist und welche beispielsweise einen mit einer Schraubhülse versehenen Einlass für ein zur Stromversorgung des elektromotorischen Drehantriebs 43 dienendes Stromkabel (nicht gezeigt) besitzt. Die Abdeckung 51 kann dabei in Form einer auf den Tragflansch 30 aufsetzbaren Abdeckkappe ausgestaltet sein, welche den gesamten Antrieb des Dosierschiebers 18 einschließlich des elektromotorischen Drehantriebs 43, des Riementriebs 46, der Gewindespindel 33 mit der entlang dieser verlagerbaren Spindelmutter 34 und dem hieran festgelegten Hebelarm 39 sowie des Wellenflansches 38 abdeckt.

## Patentansprüche

1. Verteilmaschine, insbesondere Streu- und/oder Sämaschine, mit wenigstens einem von einem Tragrahmen (1) getragenen Behälter (7; 8, 9) zur Aufnahme von pulver- und/oder partikelförmigem Verteilgut, wenigstens einer am Boden (14) des Behälters (7; 8, 9) angeordneten Auslauföffnung (16), einem der Auslauföffnung (16) nachgeordneten Dosierorgan mit einem motorisch angetriebenen, relativ zu der Auslauföffnung (16) verlagerbaren Dosierschieber (18) sowie wenigstens einem dem Dosierorgan nachgeordneten Verteilorgan (3) zum Verteilen des Verteilgutes auf dem Boden, wobei der Antrieb des Dosierschiebers (18) des Dosierorgans eine axialfest gelagerte, mittels eines motorischen Drehantriebs (43) mit axialfester Abtriebswelle (44) drehangetriebene Gewindespindel (33) umfasst, entlang welcher eine mit der Gewindespindel (33) im Eingriff stehende Spindelmutter (34) geführt ist, welche mit dem Dosierschieber (18) oder einem hieran angeordneten Hebelarm (39) in Verbindung steht, um den Dosierschieber (18) durch Rotieren der Gewindespindel (33) zu betätigen, **dadurch gekennzeichnet, dass** der Dosierschieber (18) des Dosierorgans um eine Schwenkachse (D) rotatorisch verlagerbar ist, welche den mit der Auslauföffnung (16) versehenen Boden (14) des Behälters (7; 8, 9) durchsetzt, wobei an der dem Dosierschieber (18) entgegengesetzten Seite des Bodens (14) ein drehfest mit seiner Schwenkachse (D) verbundener Hebelarm (39) mit der Spindelmutter (34) in Verbindung steht.

2. Verteilmaschine nach Anspruch 1, **dadurch gekennzeichnet, dass** die Gewindespindel (33) mittels eines elektromotorischen Drehantriebs (43), insbesondere in Form eines Servomotors, drehangetrieben ist.

3. Verteilmaschine nach Anspruch 1 oder 2, **dadurch gekennzeichnet, dass** die Gewindespindel (33)
- von der Abtriebswelle (44) des motorischen Drehantriebs (43) gebildet oder hiermit drehfest, insbesondere lösbar, verbunden ist; oder
- mittels eines Riementriebs (46), insbesondere in Form eines Zahnriementriebs, oder mittels kämmender Zahnräder mit der Abtriebswelle (44) des motorischen Drehantriebs (43) in Verbindung steht.

4. Verteilmaschine einem der Ansprüche 1 bis 3, **dadurch gekennzeichnet, dass** die Abtriebswelle (44) des motorischen Drehantriebs (43) im Wesentlichen parallel zu der Gewindespindel (33) angeordnet ist.

5. Verteilmaschine nach einem der Ansprüche 1 bis 4, **dadurch gekennzeichnet, dass** der Dosierschieber (18) des Dosierorgans rotatorisch
- um die im Wesentlichen senkrecht zu der Auslauföffnung (16) angeordnete Schwenkachse (D); und/oder
- um die im Wesentlichen senkrecht zur Axialrichtung der Gewindespindel (33); und/oder
- um die mit radialem Abstand zu der Gewindespindel (33) angeordnete Schwenkachse (D)
verlagerbar ist.

6. Verteilmaschine nach einem der Ansprüche 1 bis 5, **dadurch gekennzeichnet, dass** die Spindelmutter (34) mittels eines Nutensteins (35), in welchem sie drehfest befestigt ist, entlang der Gewindespindel (33) geführt ist, wobei die Spindelmutter (34) oder der Nutenstein (35) insbesondere wenigstens einen sich im Wesentlichen senkrecht zur Axialrichtung der Gewindespindel (33) erstreckenden Mitnehmer (41) aufweist, welcher mit einem Langloch (40) des Dosierschiebers (18) oder des hieran angeordneten Hebelarms (39) im Eingriff steht.

7. Verteilmaschine nach einem der Ansprüche 1 bis 6, **dadurch gekennzeichnet, dass** die Gewindespindel (33), insbesondere gemeinsam mit deren motorischem Drehantrieb (43), an der dem Dosierschieber (18) des Dosierorgans entgegengesetzten Seite der Auslauföffnung (16, 17) angeordnet ist.

8. Verteilmaschine nach einem der Ansprüche 1 bis 7, **dadurch gekennzeichnet, dass** die Gewindespindel (33), insbesondere gemeinsam mit deren motorischem Drehantrieb (43),
- an dem mit der Auslauföffnung (16) versehenen Boden (14) des Behälters (7; 8, 9), insbesondere lösbar, oder
- an einem hieran, insbesondere lösbar, befestigten Tragflansch (30)
angeordnet ist.

9. Verteilmaschine nach einem der Ansprüche 1 bis 8, **dadurch gekennzeichnet, dass** der Dosierschieber (18) und/oder der ihn mit der Spindelmutter (34) verbindende Hebelarm (39) lösbar mit der Schwenkachse (D) des Dosierschiebers (18) verbunden ist.

10. Verteilmaschine nach einem der Ansprüche 1 bis 9, **dadurch gekennzeichnet, dass** der den Dosierschieber (18) des Dosierorgans mit der Spindelmutter (34) verbindende Hebelarm (39) zwischen dem mit der Auslauföffnung (16) versehenen Boden (14) des Behälters (7; 8, 9) oder dem hieran befestigten Tragflansch (30) und dem motorischen Drehantrieb (43) der Gewindespindel (33), insbesondere im Wesentlichen parallel zur Ebene des Bodens (14) oder des Tragflansches (30), verlagerbar ist.

11. Verteilmaschine nach einem der Ansprüche 1 bis 10, **dadurch gekennzeichnet, dass** der motorische Drehantrieb (43) in einem Gehäuse (47) aufgenommen ist, wobei das Gehäuse (47) insbesondere
- im Wesentlichen staub- und flüssigkeitsdicht ausgestaltet ist und/oder
- die axialfeste Abtriebswelle (44) des motorischen Drehantriebs (43), insbesondere mittels wenigstens einer Gleitringdichtung, gegen das Gehäuse (47) abgedichtet ist.

12. Verteilmaschine nach einem der Ansprüche 1 bis 11, **dadurch gekennzeichnet, dass** der motorische Drehantrieb (43) wenigstens ein Getriebe, insbesondere in Form eines Koppelgetriebes, Koaxialgetriebes, Winkelgetriebes und/oder Planetengetriebes, aufweist.

13. Verteilmaschine nach einem der Ansprüche 1 bis 12, **dadurch gekennzeichnet, dass** der Abtriebswelle (44) des motorischen Drehantriebs (43) oder wenigstens einer anderen Welle des motorischen Drehantriebs (43) oder eines Getriebes desselben ein Positionserfassungssensor, insbesondere in Form eines Winkelsensors und/oder eines Drehzahlsensors, zugeordnet ist, welcher mit einer Steuer- und/oder Regeleinrichtung der Verteilmaschine in Verbindung steht.

14. Verteilmaschine nach einem der Ansprüche 1 bis 13, **dadurch gekennzeichnet, dass** der entlang der Gewindespindel (33) verlagerbaren Spindelmutter (34) ein Positionserfassungssensor, insbesondere in Form eines an einer sich parallel zu der Gewindespindel (33) erstreckenden Wandung (36) angeordneten und mit der Spindelmutter (34) zusammenwirkenden Gleit- oder Schleifkontaktes, zugeordnet ist, welcher mit einer Steuer- und/oder Regeleinrichtung der Verteilmaschine in Verbindung steht.

15. Verteilmaschine nach einem der Ansprüche 1 bis 14, **dadurch gekennzeichnet, dass** an dem Dosierschieber (18) eine Handhabe (48), wie im Wesentlichen in Form eines sich von diesem fort erstreckenden Bedienhebels (49), insbesondere lösbar, festgelegt ist, um den Dosierschieber (18) manuell betätigen zu können.

## Claims

1. A distributing machine, in particular a spreading machine and/or sowing machine, having at least one container (7; 8, 9), supported by a support frame (1), for receiving powdered and/or particulate material to be distributed, at least one outlet opening (16) arranged on the base (14) of the container (7; 8, 9), a metering element that is arranged downstream of the outlet opening (16) and that has a motor-driven metering slide (18) that can be displaced relative to the outlet opening (16), and at least one distributing element (3), arranged downstream of the metering element, for distributing the material to be distributed on the ground, wherein the drive of the metering slide (18) of the metering element comprises a threaded spindle (33) that is mounted in an axially fixed manner and that is driven in rotation by means of a motor rotary drive (43) having an axially fixed output shaft (44), guided along which threaded spindle is a spindle nut (34) that is in engagement with the threaded spindle (33) and that is connected to the metering slide (18), or to a lever arm (39) arranged thereon, in order to actuate the metering slide (18) by rotation of the threaded spindle (33), **characterized in that** metering slide (18) of the metering element is rotationally displaceable about a pivot axis (D), which passes through the base (14) of the container (7; 8, 9) that is provided with the outlet opening (16), wherein, on the side of the base (14) that is opposite to the metering slide (18), a lever arm (39) that is connected in a rotationally fixed manner to its pivot axis (D) is connected to the spindle nut (34).

2. The distributing machine as claimed in claim 1, **characterized in that** the threaded spindle (33) is driven in rotation by means of an electric-motor rotary drive (43), in particular in the form of a servomotor.

3. The distributing machine as claimed in claim 1 or 2, **characterized in that** the threaded spindle (33)
- is constituted by the output shaft (44) of the motor rotary drive (43) or is connected thereto in a rotationally fixed, in particular detachable, manner; or
- is connected to the output shaft (44) of the motor rotary drive (43) by means of a belt drive (46), or by means of meshing toothed wheels.

4. The distributing machine as claimed in any one of claims 1 to 3, **characterized in that** the output shaft (44) of the motor rotary drive (43) is arranged substantially parallel to the threaded spindle (33).

5. The distributing machine as claimed in any one of claims 1 to 4, **characterized in that** the metering slide (18) of the metering element can be displaced rotationally
- about the pivot axis (D) which is arranged substantially perpendicular in relation to the outlet opening (16); and/or
- about the pivot axis (D) which is arranged substantially perpendicularly in relation to the axial direction of the threaded spindle (33); and/or
- which is arranged at a radial distance from the threaded spindle (33).

6. The distributing machine as claimed in any one of claims 1 to 5, **characterized in that** the spindle nut (34) is guided along the threaded spindle (33) by means of a sliding block (35), in which it is fastened in a rotationally fixed manner, wherein, in particular, the spindle nut (34) or the sliding block (35) has at least one driver (41), which extends substantially perpendicularly in relation to the axial direction of the threaded spindle (33), and which is in engagement with an oblong hole (40) of the metering slide (18) or of the lever (39) arm arranged thereon.

7. The distributing machine as claimed in any one of claims 1 to 6, **characterized in that** the threaded spindle (33) is arranged, in particular jointly with its motor rotary drive (43), on the side of the outlet opening (16, 17) that is opposite to the metering slide (18) of the metering element.

8. The distributing machine as claimed in any one of claims 1 to 7, **characterized in that** the threaded spindle (33) is arranged, in particular jointly with its motor rotary drive (43),
- in particular detachably, on the base (14) of the container (7; 8, 9) that is provided with the outlet opening (16), or
- on a support flange (30) fastened, in particular detachably, thereto.

9. The distributing machine as claimed in any one of claims 1 to 8, **characterized in that** the metering slide (18) and/or the lever arm (39) connecting it to the spindle nut (34) is detachably connected to the pivot axis (D) of the metering slide (18).

10. The distributing machine as claimed in any one of claims 1 to 9, **characterized in that** the lever arm (39) connecting the metering slide (18) of the metering element to the spindle nut (34) is displaceable between the base (14) of the container (7; 8, 9) that is provided with the outlet opening (16), or the support flange fastened thereto (30), and the motor rotary drive (43) of the threaded spindle (33), in particular substantially parallel to the plane of the base (14) or of the support flange (30).

11. The distributing machine as claimed in any one of claims 1 to 10, **characterized in that** the motor rotary drive (43) is accommodated in a housing (47), wherein the housing (47), in particular,
- is designed so as to be substantially dust-tight and liquid-tight, and/or
- the axially fixed output shaft (44) of the motor rotary drive (43) is sealed against the housing (47), in particular by means of at least one mechanical face seal.

12. The distributing machine as claimed in any one of claims 1 to 11, **characterized in that** the motor rotary drive (43) has at least one transmission, in particular in the form of a coupled transmission, coaxial transmission, bevel-gear transmission and/or planetarygear transmission.

13. The distributing machine as claimed in any one of claims 1 to 12, **characterized in that** a position-sensing sensor, in particular in the form of an angular displacement sensor and/or a rotational-speed sensor, which is connected to an open-loop and/or closed-loop control means of the distributing machine, is assigned to the output shaft (44) of the motor rotary drive (43), or at least to another shaft of the motor rotary drive (43), or of a transmission thereof.

14. The distributing machine as claimed in any one of claims 1 to 13, **characterized in that**, assigned to the spindle nut (34) that can be displaced along the threaded spindle (33), there is a position-sensing sensor, in particular in the form of a sliding contact or rubbing contact that is arranged on a wall (36) extending parallel to the threaded spindle (33) and that act.s in combination with the spindle nut (34), and that is connected to an open-loop and/or closed-loop control means of the distributing machine.

15. The distributing machine as claimed in any one of claims 1 to 14, **characterized in that** fixed, in particular detachably, to the metering slide (18) there is a handle (48), such as substantially in the form of an operating lever (49) extending away therefrom, to enable the metering slide (18) to be actuated manually.

## Revendications

1. Machine de distribution, notamment machine d'épandage et/ou machine à semer, avec au moins un réservoir (7 ; 8, 9) supporté par un châssis porteur (1) pour recevoir un produit d'épandage sous forme de poudre et/ou de particules, avec au moins une ouverture d'évacuation (16) disposée au niveau du sol (14) du réservoir (7 ; 8, 9), avec un organe de dosage placé en aval de de l'ouverture d'évacuation (16) avec un piston de dosage (18) entraîné de façon motorisée et pouvant être déplacé par rapport à l'ouverture d'évacuation (16) ainsi qu'avec au moins un organe de distribution (3) placé en aval de l'organe de dosage pour la distribution du produit d'épandage sur le sol, l'entraînement du piston de dosage (18) de l'organe de dosage comprenant une broche filetée (33) disposée fixement dans le plan axial et entraînée en rotation à l'aide d'un entraînement pivotant (43) motorisé doté d'un arbre d'entraînement en sortie (44), un .écrou de broche (34) mis en prise avec la broche filetée (33) étant guidé le long de ladite broche, ledit écrou étant relié au piston de dosage (18) ou à un bras de levier (39) disposé contre pour actionner le piston de dosage (18) par rotation de la broche filetée (33), **caractérisée en ce que** le piston de dosage (18) de l'organe de dosage peut être déplacé en rotation autour d'un axe de rotation (D), ledit axe de rotation (D) traversant le sol (14), pourvu de l'ouverture d'évacuation (16), du réservoir (7 ; 8, 9), un bras de levier (39) relié solidairement en rotation à son axe de rotation (D) étant relié à l'écrou de broche (34) au niveau du côté du sol (14) opposé au piston de dosage (18).

2. Machine de distribution selon la revendication 1, **caractérisée en ce que** la broche filetée (33) est entraînée en rotation à l'aide d'un entraînement pivotant (43) électromotorisé, notamment sous la forme d'un servomoteur.

3. Machine de distribution selon la revendication 1 ou 2, **caractérisée en ce que** la broche filetée (33) est :
- formée par l'arbre d'entraînement en sortie (44) de l'entraînement pivotant (43) motorisé ou y est reliée solidairement en rotation, notamment de façon amovible ; ou
- est reliée à l'arbre d'entraînement en sortie (44) de l'entraînement pivotant (43) motorisé à l'aide d'une transmission à courroie (46), notamment sous la forme d'une transmission à courroie dentée, ou à l'aide de roues dentées s'engrenant.

4. Machine de distribution selon l'une quelconque des revendications 1 à 3, **caractérisée en ce que** l'arbre d'entraînement en sortie (44) de l'entraînement pivotant (43) motorisé est disposé pour l'essentiel parallèlement à la broche filetée (33).

5. Machine de distribution selon l'une quelconque des revendications 1 à 4, **caractérisée en ce que** le piston de dosage (18) de l'organe de dosage peut être déplacé en rotation :
- autour de l'axe de rotation (D) disposé pour l'essentiel perpendiculairement à l'ouverture d'évacuation (16) ; et/ou
- autour de l'axe de rotation (D) disposé pour l'essentiel perpendiculairement à la direction axiale de la broche filetée (33) ; et/ou
- autour de l'axe de rotation (D) disposé à une certaine distance radiale de la broche filetée (33).

6. Machine de distribution selon l'une quelconque des revendications 1 à 5, **caractérisée en ce que** l'écrou de broche (34) est guidé à l'aide d'un coulisseau (35) dans lequel il est fixé solidairement en rotation, le long de la broche filetée (33), l'écrou de broche (34) ou le coulisseau (35) comportant notamment au moins un élément d'entraînement (41) s'étendant pour l'essentiel perpendiculairement à la direction axiale de la broche filetée (33), ledit élément étant mis en prise avec un trou oblong (40) du piston de dosage (18) ou du bras de levier (39) disposé contre lui.

7. Machine de distribution selon l'une quelconque des revendications 1 à 6, **caractérisée en ce que** la broche filetée (33), est disposée, notamment conjointement avec son entraînement pivotant (43) motorisé, contre le côté de l'ouverture d'évacuation (16, 17) opposé au piston de dosage (18) de l'organe de dosage.

8. Machine de distribution selon l'une quelconque des revendications 1 à 7, **caractérisée en ce que** la broche filetée (33) est disposée, notamment conjointement avec son entraînement pivotant (43) motorisé :
- au niveau du sol (14), pourvu de l'ouverture d'évacuation (16), du réservoir (7 ; 8, 9), notamment de façon amovible ; ou
- au niveau d'une bride portante (30) y étant fixée, notamment de façon amovible.

9. Machine de distribution selon l'une quelconque des revendications 1 à 8, **caractérisée en ce que** le piston de dosage (18) et/ou le bras de levier (39) le reliant à l'écrou de broche (34) est relié de façon amovible à l'axe de rotation (D) du piston de dosage (18).

10. Machine de distribution selon l'une quelconque des revendications 1 à 9, **caractérisée en ce que** le bras de levier (39) reliant le piston de dosage (18) de l'organe de dosage à l'écrou de broche (34) peut être déplacé entre le sol (14), pourvu de l'ouverture d'évacuation (16), du réservoir (7 ; 8, 9) ou la bride portante (30) y étant fixée et l'entraînement pivotant (43) motorisé de la broche filetée (33), notamment pour l'essentiel parallèlement au plan du sol (14) ou de la bride portante (30).

11. Machine de distribution selon l'une quelconque des revendications 1 à 10, **caractérisée en ce que** l'entraînement pivotant (43) motorisé est logé dans un carter (47), le carter (47) étant notamment :
- configuré pour l'essentiel de façon étanche à la poussière et aux fluides ; et/ou
- l'arbre d'entraînement en sortie (44), fixe dans le plan axial, de l'entraînement pivotant (43) motorisé étant notamment étanchéifié par rapport au carter (47) à l'aide d'au moins une garniture étanche à anneau glissant.

12. Machine de distribution selon l'une quelconque des revendications 1 à 11, **caractérisée en ce que** l'entraînement pivotant (43) motorisé comporte au moins un engrenage, notamment sous la forme d'un engrenage d'accouplement, d'un engrenage coaxial, d'un engrenage angulaire et/ou d'un engrenage planétaire.

13. Machine de distribution selon l'une quelconque des revendications 1 à 12, **caractérisée en ce que** l'arbre d'entraînement en sortie (44) de l'entraînement pivotant (43) motorisé ou d'au moins un autre arbre de l'entraînement pivotant (43) motorisé ou d'un engrenage de celui-ci est associé à un capteur de détection de position, notamment sous la forme d'un capteur d'angle et/ou d'un capteur de vitesse de rotation relié au dispositif de commande et/ou de réglage de la machine de distribution.

14. Machine de distribution selon l'une quelconque des revendications 1 à 13, **caractérisée en ce qu'**un capteur de détection de position, notamment sous la forme d'un contact glissant ou coulissant, disposé au niveau d'une paroi (36) s'étendant parallèlement à la broche filetée (33) et interagissant avec l'écrou de broche (34) est associé à l'écrou de broche (34) pouvant être déplacé le long de la broche filetée (33), ledit contact étant relié au dispositif de commande et/ou de réglage de la machine de distribution.

15. Machine de distribution selon l'une quelconque des revendications 1 à 14, **caractérisée en ce qu'**une manette (48), par exemple pour l'essentiel sous la forme d'un levier de commande (49) s'étendant depuis là, est fixée au piston de dosage (18), notamment de façon amovible, pour pouvoir actionner manuellement le piston de dosage (18).
